# EUROPEAN PATENT APPLICATION

(11) **EP 0 644 116 A1**
(43) Date of publication of application: **22.03.1995**
(21) Application number: 94305954.3
(22) Date of filing: 11.08.1994
(51) Int. Cl.: B64F 1/32, F41A 9/87

(54) **Lifting apparatus**

(30) Priority: 16.09.1993 GB 9319145
(71) Applicant: International Business Machines Corporation, Armonk, N.Y. 10504 (US)
(72) Inventor: Coles, Richard Denis, Nr. Emsworth, Hampshire PO10 8HS (GB); Thomasson, Barrie William, Fareham, Hampshire, P016 7HD (GB)
(74) Representative: Burt, Roger James, Dr.

(57) **Abstract**

A lifting apparatus for lifting equipment 220 into position on the lower surface of a horizontally extending projection 200, such as a weapon station 200 on an aircraft is described. The apparatus comprises a main body 100 positioned above the projection 200, from which lifting cables 115, 120 are lowered and attached to the equipment 220 to be raised or to a tray 140 on which it is positioned. A drive mechanism 130 is used to raise the equipment 220 into position below the projection 200. The equipment 220 is fixed in position and the apparatus removed. Guide bars 105, 110 may optionally be used, to control the movement of the equipment 220 whilst it is being raised.

## Description

### Field of the Invention

The present invention relates to apparatus for lifting loads into position on an aircraft, and more specifically for lifting weapons into position on a rotary winged aircraft (helicopter) using a single person who may be located remotely.

### Background of the Invention

Operational, rotary winged aircraft (helicopters) are frequently deployed from surface ships having decks from which the helicopters take off, land and are sometimes refuelled, serviced and rearmed. These decks are usually positioned at the rear of the ship to allow the helicopter easier access to and from the deck during landing and take off. Because of their positioning at the rear of the ship, the deck is subject to considerable movement such as vertical movement caused by the ship pitching and yawing caused by the ship turning and by waves. Refuelling, servicing and rearming a helicopter during such movement poses considerable problems with the handling of heavy objects such as weapons which can move uncontrollably as the ship pitches and yaws.

Conventionally, during weapon arming, the weapons, which are of considerable weight, were controlled by using a number of crew members to stabilise the weapons while they were being lifted. With modern ships the number of crew is being reduced for a variety of reasons, including economic ones. During a turn-around between landing and take off of the helicopter many tasks, including refuelling and servicing of the mechanical and electrical systems of the helicopter must be completed by the crew. With the restricted space available on the deck of the ship, the total number of crew available to work on the helicopter is restricted. Whilst members of the crew are assisting with the stabilisation of the weapons being lifted into position they are not able to complete the other required tasks. In addition there is a risk of injury to the crew by being hit by a heavy moving weapon.

Helicopters, such as the Sea King and Lynx helicopter have weapon stations which protrude from the side of the helicopter and to which the weapons are affixed below these stations. The weapons are lifted into place by fixing a frame in the shape of a tripod to the helicopter above the upper surface of the weapon station. Lifting cables are then lowered from the apex of the A and attached to the weapon. The weapon is carried on a trolley. A winch or similar mechanism is then used to hoist the weapon into position below the weapon station.

More modern helicopters have multiple weapons affixed to the same weapon station. The weapons are positioned beside each other on an outer weapon station and an inner weapon station. Using the tripod described above access to the inner weapon station is difficult, particularly if the outer weapon station has a weapon affixed to it. This can occur when the weapon affixed to the inner weapon station has been used and the inner weapon station must be reloaded. To overcome this problem the outer weapon must be unloaded, the inner weapon loaded and the outer weapon reloaded with all the consequent problems described above. Weapon stations on larger helicopters, such as the EH-101, are positioned further from the ground. Positioning a tripod, such as that described above, can be difficult and time consuming.

GB Patent 667,155 discloses a device for lifting invalids with a base having arms extending upwards from it. Each arm has a winch on it for lifting the invalid. However, the device is not suitable for loading weapons onto a helicopter, since the helicopter will move by small amounts relative to the platform whilst the loading is in place, making positive engagement of the weapon difficult.

US Patent 4,846,451 discloses an engine removal structure which engages with the wheel hubs so provide support for holding the transaxle, engine, suspension and transmission systems as a unitary structure. This allows easy removal from the vehicle and replacement therein. The structure is free to move on wheels, and is supported by the ground, rather than from the vehicle from which the systems are being removed and replaced.

So it would be advantageous if an alternative system, which enabled easy access to the inner weapon station, enabled the weapon to lifted in full control without risk of sudden movement. In addition, operation by a single person, allowing a reduced number of crew to service the helicopter and allowing a quicker turnaround time would be an advantage.

### Disclosure of the Invention

Accordingly the invention provides an apparatus for loading equipment into position on an aircraft, the aircraft having a substantially horizontally extending substantially planar projection to which the equipment is to be attached, the apparatus comprising a body, of sufficient length to overlap the projection, positioned, in use, adjacent to the aircraft and above the projection, two or more lifting cables, for lifting the equipment into position below the projection and drive mechanism means, attached to the body, causing the lifting cables to lift the weapon into position below the projection. In a preferred embodiment, the apparatus further comprises a tray to which, during loading, the lifting cables attach and on which the equipment is transported to the aircraft. Also, in a preferred embodiment, the apparatus further comprises one or more guide bars, the guide bars being substantially "U" shaped, and pivoting at the centre of the "U", on a horizontal axis perpendicular to the major axis of the main body, from a stowed position in which the arms are substantially parallel to the main body to an operating position in which the arms extend towards the equipment being loaded.

### Brief Description of the Drawings

Embodiments of the invention will now be described, by way of example, with reference to the accompanying drawings, in which:
Figure 1 is an isometric view of a hoist and tray according to the invention; and
Figure 2 is a side view of the hoist and tray of figure 1 in position during a loading operation.

### Detailed Description of the Invention

The present invention uses a projection fitted to and substantially horizontally extending from, for example, a rotary winged aircraft (helicopter). The projection, such as a weapon station is rigidly fixed to the fuselage of the helicopter and has fixing points to which the weapons are attached as part of the loading operation. The station has the necessary mechanisms to allow release of the weapon from the helicopter when the weapon is to be used. The weapon station also has locating points for the hoist to be placed above it.

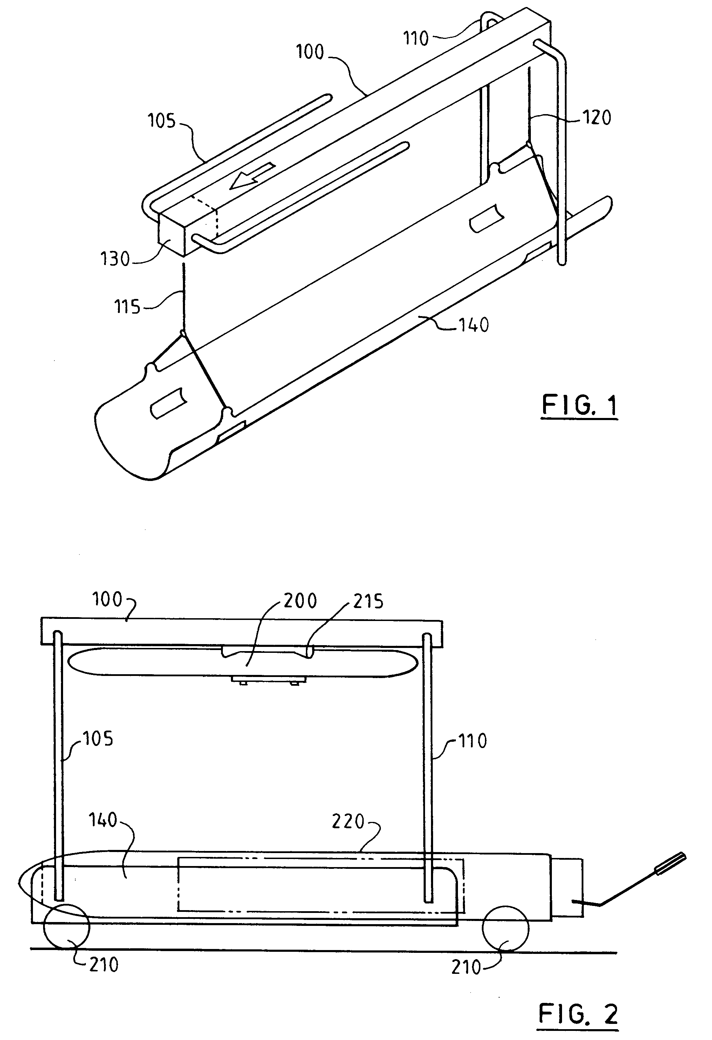

Figure 1 shows a hoist and tray used in an embodiment of the invention. The hoist consists of a main body 100 having guide bars 105, 110 together with lifting cables 115, 120, a drive mechanism 130 for these lifting cables 115, 120 and a tray 140.

The main body 100 is of such a length that it protrudes beyond the forward and the rearward ends of the weapon station. Its height and width are such that it sufficiently rigid and can contain within it the drive mechanism 130 which will be described below. The guide bars 105, 110 are "U" shaped and are pivotally mounted at each end of the main body 100. They have a stowed position, where the arms of the guide bars 105, 110 are positioned along the length of the main body 100. Guide bar 105 is shown in the stowed position. They have an operating position where they are swivelled around the pivot point so that the arms of the guide bars 105, 110 are directed towards the weapon to be loaded. Guide bar 110 is shown in the operating position. In this position they act to guide and stabilise the weapon as it is loaded into position on the weapon station.

Below the main body 100 is a tray 140, on which the weapon to be loaded is positioned. This tray 140 fits between the weapon and a trolley, on which the weapon is transported to the helicopter. In a preferred embodiment the tray 140 is shaped to fit the weapon closely. The tray 140 may be rigidly affixed to the trolley during transport of the weapon, or may use the weight of the weapon to hold it in place. From positions near to each end of the main body 100 of the hoist emerge lifting cables 115, 120, which are attached to the tray 140 in order to lift the tray 140 carrying the weapon into position below the weapon station.

Within or close to the main body 100, the lifting cables 115, 120 are connected to a drive mechanism 130. This drive mechanism 130 may be manual or powered electrically or by other means such as hydraulics. A manual version will be typically operated by a winch having a detachable handle. An electric version will typically be operated by a small motor such as those found in cordless power tools. Preferably the mechanism 130 is common to both lifting cables 115, 120, so as to ensure that the weapon is lifted evenly from both ends. However, with suitable additions to the mechanism 130, separate drives could be provided to each lifting cable 115, 120. In a preferred embodiment the drive mechanism 130 is operated electrically. With such a powered mechanism 130, the operator may control the drive mechanism 130 from a remote position, thereby increasing the safety of the operator, should the weapon swing uncontrollably.

In the loading process, the main body 100 of the hoist is placed above the weapons station (200 in figure 2). The trolley, carrying the weapon positioned on the tray 140, is located below the hoist. Figure 2 shows the hoist described above located on the weapon station 200 of the helicopter with a trolley 210, tray 140 and weapon 220 in position ready to be loaded onto the weapon station 200. The lifting cables 115, 120 are withdrawn from the main body 100 and attached to the tray 140. The guide bars 105, 110 are moved from their stowed position to their operating position. The guide bars 105, 110 ensure location of the weapon 220 on the weapon station 200 and prevent the weapon 220 from swinging if the loading process is being carried out on an unstable platform, such as the deck of a ship at sea. The drive mechanism 130 is then used to raise the weapon 220, using the lifting cables 115, 120, into position below the weapon station 200. The weapon 220 is then attached to the weapon station 200 using fixing pins or the like. The drive mechanism 130 is operated in reverse to allow the tray 140 to return to its position on the trolley 210. The lifting cables 115, 120 are detached from the tray 140 and retracted into the main body 100. The trolley 210 and tray 140 are moved away from the helicopter. The guide bars 105, 110 are retracted from their operating position to their stowed position. The main body 100 of the hoist is then removed from its position above the weapon station 200.

Whilst the description above has referred to weapons 220 being loaded, the invention could also be applied to the loading of other pieces of equipment, such as tanks of fuel, into position on the outside of an helicopter. In addition the invention could be used on a fixed wing aircraft.

## Claims

1. An apparatus for loading equipment (220) into position on an aircraft, the aircraft having a substantially horizontally extending substantially planar projection (200) to which the equipment (220) is to be attached, the apparatus comprising:
a body (100), of length sufficient to overlap the projection (200), positioned, in use, adjacent to the aircraft and above the projection (200);
two or more lifting cables (115, 120), for lifting the equipment into position below the projection (200); and
drive mechanism means (130), attached to the body (100), causing the lifting cables (115, 120) to lift the equipment into position below the projection (200).

2. An apparatus as claimed in claim 1 further comprising a tray (140) to which, during loading, the lifting cables (115, 120) attach and on which the equipment is transported to the aircraft.

3. An apparatus as claimed in any preceding claim further comprising one or more guide bars (105, 110), the guide bars (105, 110) being substantially "U" shaped, and pivoting at the centre of the "U", on a horizontal axis perpendicular to the major axis of the body (100), from a stowed position in which the arms are substantially parallel to the body (100) to an operating position in which the arms extend towards the equipment (220) being loaded.

4. An apparatus as claimed in any preceding claim wherein the aircraft is a rotary winged aircraft.

5. An apparatus as claimed in any preceding claim wherein the projection (200) has affixed to it two or more pieces of equipment (220).

6. An apparatus as claimed in any preceding claim wherein the drive mechanism means (130) is powered electrically and is capable of being remotely controlled by an operator.

7. An apparatus as claimed in any preceding claim wherein the equipment is a weapon 220.
